# EUROPÄISCHE PATENTSCHRIFT

(11) **EP 2 197 326 B1**
(45) Veröffentlichungstag und Bekanntmachung des Hinweises auf die Patenterteilung: **18.01.2012**
(21) Anmeldenummer: 08802150.6
(22) Anmeldetag: 13.09.2008
(51) Int. Cl.: A47J 27/04

(54) **HAUSHALTSGERÄT MIT EINER BEDIENBLENDE UND MIT EINEM TANK ZUR AUFNAHME EINES FLUIDS**
HOUSEHOLD APPLIANCE HAVING A CONTROL PANEL AND HAVING A TANK FOR ACCOMMODATING A FLUID
APPAREIL MÉNAGER ÉQUIPÉ D'UN PANNEAU DE COMMANDE ET D'UN RÉSERVOIR POUR RECEVOIR UN FLUIDE

(30) Priorität: 08.10.2007 DE 102007048200
(43) Veröffentlichungstag der Anmeldung: 23.06.2010
(73) Patentinhaber: Miele & Cie. KG, 33332 Gütersloh (DE)
(72) Erfinder: ADAMCZAK, Jürgen, 33818 Leopoldshöhe (DE); BERGER, Uwe, 32278 Kirchlengern (DE); HÖHN, Rüdiger, 32120 Hiddenhausen (DE); THORMAN, Franz, 33649 Bielefeld (DE); WIENEKE, Wolfgang, 32257 Bünde (DE)
(86) Internationale Anmeldenummer: PCT/EP2008/007599
(87) Internationale Veröffentlichungsnummer: WO 2009/046811

(56) Entgegenhaltungen:
- DE-U1- 9 400 648

## Beschreibung

Die Erfindung betrifft ein Haushaltsgerät mit einer Bedienblende und mit einem Tank zur Aufnahme eines Fluids der im Oberbegriff des Anspruchs 1 genannten Art.

Ein derartiges Haushaltsgerät ist bereits aus der DE 94 00 648 U1 bekannt. Das bekannte Gerät is als ein Gargerät mit einer Befeuchtungseinrichtung ausgebildet und weist eine Bedienblende und einen Tank zur Aufnahme eines Fluids auf. Zur Befüllung mit dem Fluid ist an dem Tank eine Einfüllöffnung vorgesehen. In seiner Betriebslage ist der Tank hinter der Bedienblende in dem Inneren des Haushaltsgeräts angeordnet. Zur Befüllung mit dem Fluid wird der als Wasserschublade ausgebildete Tank nach vorne durch die Bedienblende teilweise herausgezogen.

Der Erfindung stellt sich somit das Problem ein Haushaltsgerät mit einer Bedienblende und mit einem Tank zur Aufnahme eines Fluids derart weiterzubilden, dass der optische Gesamteindruck der Front des Haushaltsgeräts verbessert ist.

Erfindungsgemäß wird dieses Problem durch ein Haushaltsgerät mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen insbesondere in der Verbesserung des optischen Gesamteindrucks der Front des Haushaltsgeräts und damit des gesamten Haushaltsgeräts. Insbesondere ist dies bei Einbaugeräten ein großer Vorteil, da dort in der Regel lediglich die Front des Haushaltsgeräts für den Benutzer zugänglich und zu sehen ist. Darüber hinaus kann während des Normalbetriebs die gesamte Fläche der Bedienoberfläche der Bedienblende für die Bedienung des Haushaltsgeräts, also zur Programmauswahl und Parameter- und Programmeinstellung, verwendet werden. Eine Öffnung in der Bedienblende für das Befüllen und/oder die Entnahme des Tanks kann entfallen. Der Tank, insbesondere dessen Frontseite, muss zur Erlangung eines gefälligeren äußeren Erscheinungsbildes gestalterisch nicht an die Front des Haushaltsgeräts angepasst werden. Dies ist ein gravierender Vorteil, da bei der heutigen Modellvielfalt entsprechend viele Varianten abgedeckt werden müssten.

Grundsätzlich ist die Bedienblende nach Art, Material, geometrischer Ausgestaltung und Anordnung an dem Rest des Haushaltsgeräts in weiten geeigneten Grenzen frei wählbar. Vorteilhafterweise ist die Bedienblende in der Ruhelage und bezogen auf die Betriebslage des Haushaltsgeräts am oberen Rand der Front des Haushaltsgeräts angeordnet und nimmt in der exponierten Lage eine Höhenlage oberhalb der Ruhelage ein. Viele Haushaltsgeräte weisen einen durch eine Tür verschließbaren Behandlungsraum auf und sind beispielsweise in einer Küchenschrankunterzeile eingebaut oder stehen auf einem Boden auf. Entsprechend ist es ergonomisch sinnvoll, die Bedienblende oberhalb des Behandlungsraums anzuordnen. Durch die erfindungsgemäße Ausführungsform ist gewährleistet, dass die Bedienblende bei der Überführung in und in der exponierten Lage beispielsweise nicht mit einer geöffneten Tür kollidiert. Ferner wird durch die in der exponierten Lage befindliche Bedienblende dann der Zugriff auf das Innere des Behandlungsraums nicht behindert.

Eine vorteilhafte Weiterbildung sieht vor, dass die Bedienblende in der exponierten Lage und bezogen auf die Betriebslage des Haushaltsgeräts vor der Front des Haushaltsgeräts liegt. Auf diese Weise ist es möglich, dass die Front des Haushaltsgeräts und der Bedienblende in deren Ruhelage in einer Ebene angeordnet werden können.

Grundsätzlich ist es möglich, dass die Bedienblende, beispielsweise schwenkbeweglich, direkt an dem Korpus eines erfindungsgemäßen Haushaltsgeräts gehalten ist. Die Bedienblende kann dann beispielsweise mit einer an dem Korpus des Haushaltsgeräts gehaltenen Verstellvorrichtung kraftübertragend verbunden sein. Vorteilhafterweise ist die Bedienblende an einer an dem Korpus des Haushaltsgeräts gehaltenen Verstellvorrichtung angeordnet. Auf diese Weise ist der Gestaltungs- sowie der Konstruktionsspielraum bei der Bedienblende verbessert.

Eine vorteilhafte Weiterbildung der letztgenannten Ausführungsform sieht vor, dass die Bedienblende mittels der Verstellvorrichtung bei der Überführung von der Ruhelage in die exponierte Lage zuerst in eine vor der Front befindliche Zwischenlage und danach von der Zwischenlage in die exponierte Lage überführbar ist. Hierdurch ist eine Kollision mit anderen Bauteilen des erfindungsgemäßen Haushaltsgeräts oder benachbart angeordneten Möbeln oder Geräten, beispielsweise Griffen oder dergleichen, bei der Überführung in die exponierte Lage wirksam verhindert.

Eine andere vorteilhafte Weiterbildung sieht vor, dass die Verstellvorrichtung derart ausgebildet ist, dass der Neigungswinkel der Bedienoberfläche der Bedienblende relativ zu dem Rest des Haushaltsgeräts bei der Überführung in die exponierte Lage und in der exponierten Lage im Wesentlichen dem Neigungswinkel der Bedienoberfläche in der Ruhelage entspricht. Auf diese Weise ist erreicht, dass die Bedienoberfläche für den Benutzer unabhängig von der momentanen räumlichen Lage der Bedienblende immer unter dem gleichen Winkel erscheint. Hierdurch ist der Benutzerkomfort und auch die Bediensicherheit des Haushaltsgeräts erhöht.

Grundsätzlich ist es möglich, dass der Tank unlösbar in dem Inneren des Haushaltsgeräts angeordnet ist. Lediglich die Einfüllöffnung des Tanks muss zum Befüllen mit dem Fluid bei in der exponierten Lage befindlicher Bedienblende zugänglich sein. Vorteilhafterweise ist der Tank entnehmbar in einem hinter der Bedienblende in dem Inneren des Haushaltsgeräts angeordneten Gehäuse gehalten. Auf diese Weise ist das Befüllen des Tanks mit dem Fluid wesentlich erleichtert.

Eine besonders vorteilhafte Weiterbildung der vorgenannten Ausführungsform sieht vor, dass die Bedienblende und das Gehäuse mittels einer Kupplung derart gekoppelt sind, dass bei der Bewegung der Bedienblende von der Ruhelage in die exponierte Lage das Gehäuse automatisch von einer integrierten Lage in dem Korpus in eine Befülllage zur Befüllung des Tanks mit dem Fluid oder zur Entnahme des Tanks überführbar ist. Hierdurch ist die Entnahme des Tanks aus und das Einstellen des Tanks in das Haushaltsgerät weiter erleichtert.

Gleiches gilt für die vorteilhafte Weiterbildung, nämlich dass die Bedienblende und das Gehäuse mittels einer Kupplung derart gekoppelt sind, dass bei der Bewegung der Bedienblende von der exponierten Lage in die Ruhelage das Gehäuse automatisch von einer Befülllage zur Befüllung des Tanks mit dem Fluid oder zur Entnahme des Tanks in eine integrierte Lage in dem Korpus überführbar ist.

Grundsätzlich ist es möglich, dass die Bedienblende rein manuell zu bewegen ist. Vorteilhafterweise weist die Bedienblende oder die Verstellvorrichtung für die Bewegung der Bedienblende zwischen der Ruhelage und der exponierten Lage einen Antrieb auf. Beispielsweise wäre es denkbar, dass die Bedienblende oder die Verstellvorrichtung in der Ruhelage der Bedienblende mittels einer Verriegelung gegen eine vorgespannte Gasdruckfeder oder dergleichen in der Lage gehalten ist und durch Lösen der Verriegelung mittels der Gasdruckfeder automatisch in die exponierte Lage überführt wird. Zwecks Rücküberführung in die Ruhelage drückt der Benutzer die Bedienblende gegen die Kraft der Gasdruckfeder in die entgegengesetzte Richtung, bis die Verriegelung wieder verriegelt. Eine komfortablere Ausführungsform könnte alternativ dazu beispielsweise einen elektromechanischen Antrieb vorsehen, der zwecks Überführung der Bedienblende in die exponierte Lage oder in die Ruhelage mittels der Betätigung eines Bedienelements oder programmgesteuert von einer elektrischen Steuerung des Haushaltsgeräts angesteuert wird.

Ein Ausführungsbeispiel der Erfindung ist in den Zeichnungen rein schematisch dargestellt und wird nachfolgend näher beschrieben. Es zeigt
- Figur 1: eine Frontansicht eines erfindungsgemäßen Haushaltsgeräts mit der Bedienblende in der Ruhelage,
- Figur 2: das Haushaltsgerät aus Fig. 1 in einer teilweisen Detailansicht im Bereich der Bedienblende mit der Bedienblende in der exponierten Lage und in teilweiser Darstellung,
- Figur 3: eine perspektivische Draufsicht auf das Haushaltsgerät in teilweiser Darstellung,
- Figur 4a-4d: Einzeldarstellungen von verschiedenen Lagen der Bedienblende in teilweisen Seitenansichten,
- Figur 5a, 5b: das Haushaltsgerät in teilweisen Darstellungen ähnlich wie in Fig. 4b und 4d und
- Figur 6: eine geschnittene Detailansicht des teilweise dargestellten Haushaltsgeräts im Bereich derTanks.

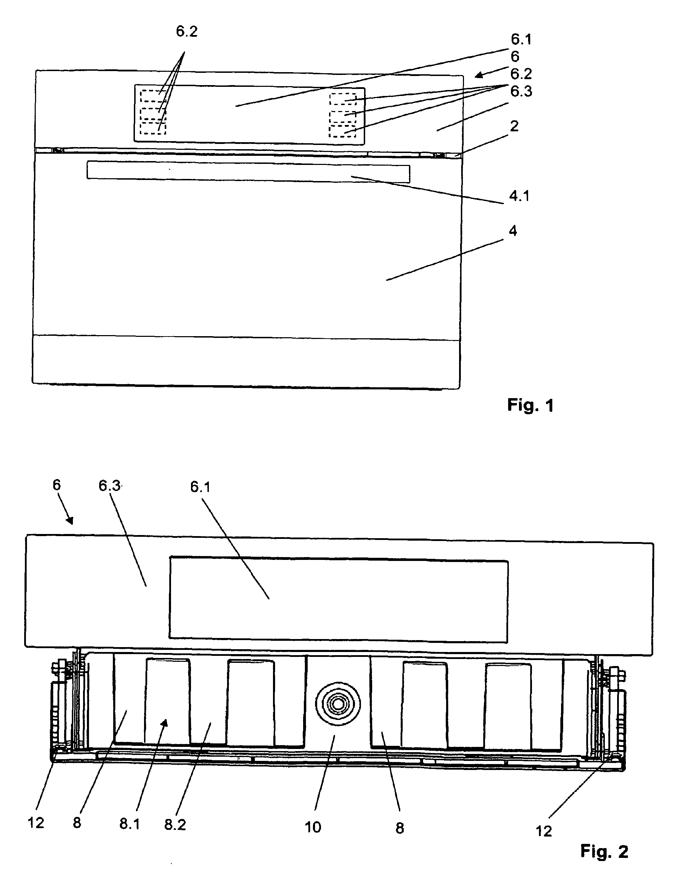

In Fig. 1 ist ein erfindungsgemäßes Haushaltsgerät dargestellt. Das Haushaltsgerät ist hier als ein Dampfgargerät ausgebildet. Das Dampfgargerät weist einen Korpus 2 auf. In dem Korpus 2 ist ein nicht näher dargestellter Behandlungsraum ausgebildet, der durch eine Tür 4 mit einem Türgriff 4.1 verschließbar ist. Das Dampfgargerät ist als ein Einbaugerät ausgebildet und in Fig. 1 in der Betriebslage dargestellt. Oberhalb des Behandlungsraums und damit der Tür 4 ist eine Bedienblende 6 angeordnet. Die Bedienblende 6 weist eine grafikfähige Anzeige 6.1 auf. Die Anzeige 6.1 beinhaltet zur Bedienung berührungsempfindliche Bereiche, sogenannte touch-Bedienelemente 6.2. Die Anzeige 6.1 und die Bedienelemente 6.2 sind auf der dem Benutzer zugewandten Bedienoberfläche 6.3 der Bedienblende 6 angeordnet. Über die Bedienelemente 6.2 und die Anzeige 6.1 kann der Benutzer das Dampfgargerät auf an sich bekannte Weise steuern, also beispielsweise Garprogramme auswählen und starten. Hierzu ist die Anzeige 6.1 und sind die Bedienelemente 6.2 auf dem Fachmann bekannte Weise mit einer nicht näher dargestellten Gerätesteuerung signalübertragend verbunden. Die Bedienblende 6 ist auf nachfolgend näher erläuterte Weise bewegbar an dem Korpus 2 angeordnet und in Fig. 1 in der Ruhelage dargestellt.

Fig. 2 zeigt das Dampfgargerät aus Fig. 1 in einer Detailansicht, jedoch mit der Bedienblende 6 in der exponierten Lage. In der exponierten Lage ist die Bedienblende 6 nach oben verschwenkt, so dass der Raum, der in der Ruhelage der Bedienblende 6 hinter dieser in dem Inneren des Korpus 2 angeordnet ist, für den Benutzer zugänglich ist. In dem Raum sind hier zwei Tanks 8 angeordnet. Die Tanks 8 dienen zur Aufnahme von Wasser und sind entnehmbar in einem Gehäuse 10 angeordnet. Hierfür sind an den Tanks 8 Griffmulden 8.1 und Handgriffe 8.2 angeordnet. Das Gehäuse 10 ist auf zwei Teleskopauszügen 12 beweglich gehalten, so dass das Gehäuse 10 in der exponierten Lage der Bedienblende 6 nach vorne, also aus der Bildebene heraus, aus dem Raum herausbewegt werden kann.

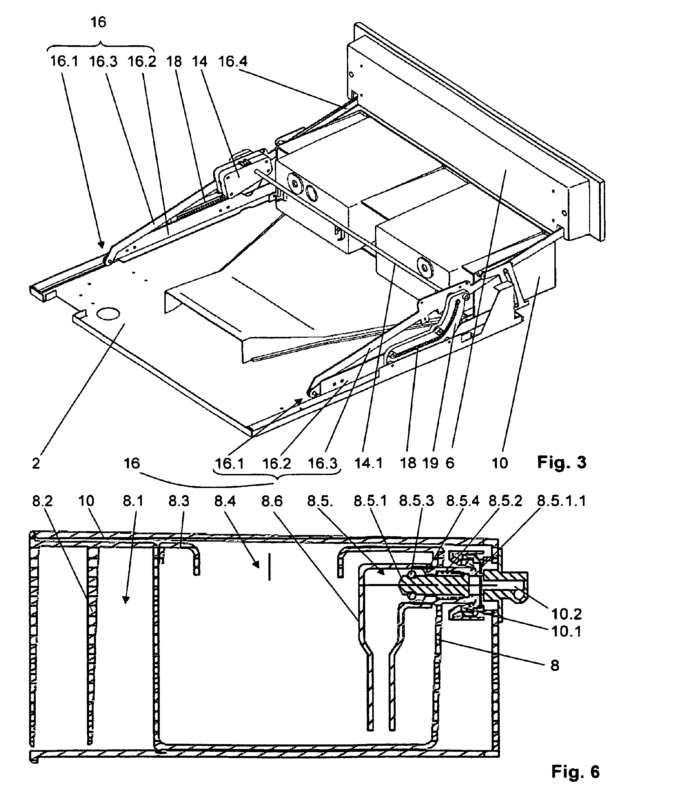

Die Bedienblende 6 wird hier mittels eines in Fig. 3 dargestellten Antriebs 14 zwischen der Ruhelage und der exponierten Lage hin und her bewegt. Hierzu wird der als Elektromotor ausgebildete Antrieb 14 auf dem Fachmann bekannte Weise von der Gerätesteuerung angesteuert. Bei dem vorliegenden Ausführungsbeispiel betätigt der Benutzer zur Überführung der Bedienblende 6 von der Ruhelage in die exponierte Lage ein vorher festgelegtes Bedienelement 6.2. Zur Rücküberführung in die Ruhelage muss dann dieses Bedienelement 6.2 erneut betätigt werden. Um eine Beschädigung des Haushaltsgeräts bei unsachgemäßer Bedienung zu vermeiden, wird die korrekte Lage der Tanks 8 in dem in das Gehäuse 10 eingeschobenen Zustand auf dem Fachmann bekannte Weise sensorisch erfasst und in der Gerätesteuerung verarbeitet. Ist zumindest ein Tank 8 nicht korrekt in das Gehäuse 10 eingesetzt, wird die Bedienblende 6 auch bei Betätigung des Bedienelements 6.2 nicht in die Ruhelage überführt.

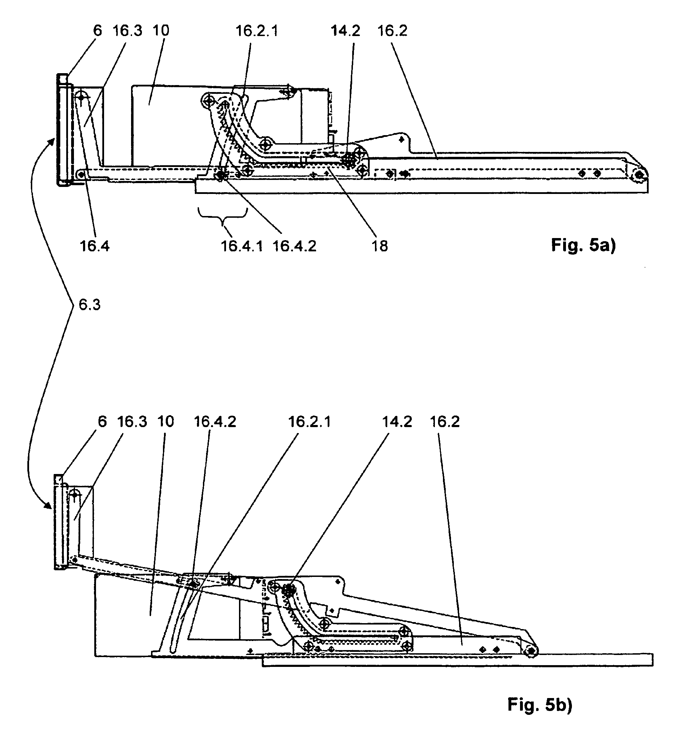

Die Bedienblende 6 ist über eine Verstellvorrichtung 16 an dem Korpus 2 gehalten. Die Verstellvorrichtung 16 weist hier auf beiden Seiten des Gehäuses 10 jeweils zwei über ein Gelenk 16.1 gelenkig verbundene Stangen 16.2 und 16.3 auf. An einer der Stangen 16.3 ist der Antrieb 14 befestigt. Die Abtriebswelle 14.1 des Antriebs 14 weist an den beiden stirnseitigen Enden jeweils ein Zahnrad 14.2 auf, von denen eines in Fig. 5 näher dargestellt ist. Die Zahnräder 14.2 greifen jeweils in eine an dem Korpus befestigte Zahnstange 18 ein.

Damit das Gehäuse 10 bei dem vorliegenden Ausführungsbeispiel bei der Überführung der Bedienblende von der Ruhelage in die exponierte Lage automatisch aus dem Korpus 2 heraus und bei deren Rücküberführung in die Ruhelage automatisch zurück in den Korpus 2 bewegt wird, ist das Gehäuse 10 mit den Stangen 16.2 an den Teleskopauszügen 12 befestigt.

Startet der Benutzer auf die oben erläuterte Weise die Überführung der Bedienblende 6 von der in Fig. 1 dargestellten Ruhelage in die in Fig. 2 und 3 dargestellte exponierte Lage dreht der Antrieb 14 die Abtriebswelle 14.1 und damit die Zahnräder 14.2. Die Zahnräder 14.2 laufen auf den Zahnstangen 18 in Richtung der Front des Haushaltsgeräts, so dass die Verstellvorrichtung 16 mit den Stangen 16.2 und 16.3 ebenfalls in Richtung der Front des Haushaltsgeräts bewegt wird. Da die Zahnstangen 18 nach oben verlaufen, werden dadurch die Stangen 16.3 und damit die Bedienblende 6 entgegen der Schwerkraft angehoben. Gleichzeitig wird das Gehäuse 10 durch die Bewegung der Stangen 16.2 aus dem Inneren des Korpus 2, also aus einer in dem Korpus 2 integrierten Lage, herausbewegt, was in Fig. 3 deutlich zu sehen ist. Wie in Fig. 3 dargestellt, nimmt die Bedienblende 6 in der exponierten Lage eine Höhenlage oberhalb der Ruhelage ein. Zum anderen liegt dann das Gehäuse 10 leicht zugänglich teilweise vor der Front des Haushaltsgeräts, nämlich in einer Befülllage zur Befüllung der Tanks 8 mit einem Fluid, hier Wasser, oder zur Entnahme des Tanks 8.

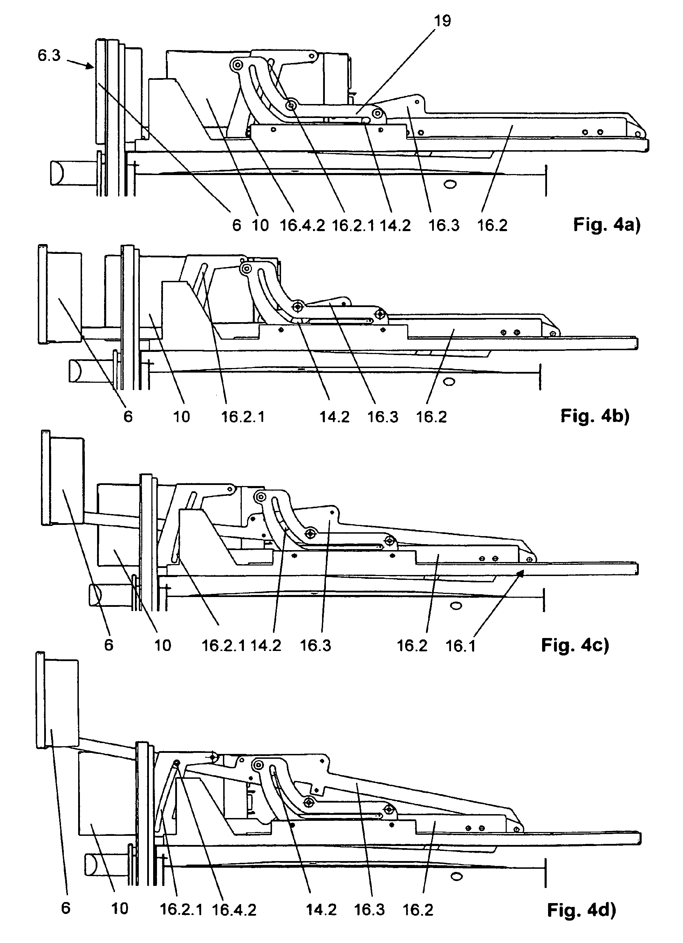

Der Bewegungsablauf der Bedienblende 6 und des Gehäuses 10 bei der Überführung der Bedienblende 6 von der Ruhelage in die exponierte Lage ist in den Fig. 4a bis 4d näher dargestellt. Wie daraus deutlich ersichtlich ist, liegt die Bedienblende 6 in der exponierten Lage, bezogen auf die dargestellte Betriebslage des Haushaltsgeräts, vor dessen Front. Ferner geht daraus hervor, dass die Bedienblende 6 bei der vorgenannten Überführung zuerst in eine vor der Front befindliche Zwischenlage, siehe Fig. 4b, und danach von der Zwischenlage in die exponierte Lage, siehe Fig. 4d, überführt wird.

Damit die Bedienoberfläche 6.3 der Bedienblende 6 bei der Bewegung der Bedienblende 6 zwischen der Ruhelage und der exponierten Lage im Wesentlichen den Neigungswinkel relativ zu dem Rest des Haushaltsgeräts beibehält weist die Verstellvorrichtung 16 hier Kopplungsstangen 16.4 auf, von denen in den Fig. 3 und 5 lediglich eine dargestellt ist. Die Kopplungsstangen 16.4 verlaufen parallel zu den in dem der Front zugewandten Ende U-förmig ausgebildeten Stangen 16.3. Die Kinematik der Stangen 16.3, der Kopplungsstangen 16.4 und der Bedienblende 6 ist in der Fig. 5 näher dargestellt, wobei Fig. 5a die Verhältnisse bei in der Zwischenlage befindlicher Bedienblende 6 und Fig. 5b die Verhältnisse bei in exponierter Lage befindlicher Bedienblende 6 wiedergibt. Die Stangen 16.3 sind an dem der Bedienblende 6 zugewandten Ende abgewinkelt und gelenkig mit der Bedienblende 6 verbunden. Die Kopplungsstangen 16.4 sind ebenfalls gelenkig mit der Bedienblende 6 verbunden. An dem der Bedienblende 6 abgewandten Ende 16.4.1 weisen die Kopplungsstangen 16.4 jeweils einen Bolzen 16.4.2 auf, der in ein Langloch 16.2.1 in der jeweils zugeordneten Stange 16.2 eingreift. Hierzu muss der Bolzen 16.4.2 durch die jeweilige Stange 16.3 hindurchgreifen, wofür die Stangen 16.3 ein geeignet ausgebildetes und nicht näher dargestelltes Langloch aufweisen. Bei der Überführung der Bedienblende 6 von der Ruhelage in die exponierte Lage werden, wie bereits erläutert, die Stangen 16.3 angehoben. Da die Kopplungsstangen 16.4 in den U-förmig ausgebildeten Abschnitten der Stangen 16.3 geführt sind, werden diese ebenfalls mit angehoben. Gleichzeitig wird der Bolzen 16.4.2 in dem Langloch 16.2.1 geführt; und zwar entgegen der Bewegungsrichtung der Stangen 16.2. Dadurch ziehen die Kopplungsstangen 16.4 die Bedienblende 6 entgegen der Bewegungsrichtung der Stangen 16.2, also in der Bildebene von Fig. 5a nach rechts, bis in die in Fig. 5b dargestellte und der exponierten Lage der Bedienblende 6 zugeordneten Position. Hierdurch ist mit konstruktiv einfachen Mitteln erreicht, dass der Neigungswinkel der Bedienoberfläche 6.3 der Bedienblende 6 unabhängig von deren Lage relativ zu dem Rest des Haushaltsgeräts erhalten bleibt. Zur besseren Führung der Abtriebswelle 14.1 greifen die Zahnräder 14.2 mit einem bolzenartigen und sich in axialer Richtung erstreckenden Fortsatz in eine Führungsnut jeweils eines an den Zahnstangen 18 befestigten Führungsblechs 19 ein. Siehe hierzu insbesondere die Fig. 4.

Möchte der Benutzer die Bedienblende 6 wieder in die Ruhelage rücküberführen, drückt dieser erneut das entsprechende Bedienelement 6.2. Sofern die Tanks 8, wie bereits erläutert, richtig in das Gehäuse 10 eingesetzt sind, erfolgt die Rücküberführung der Bedienblende 6 von der exponierten Lage in die Ruhelage analog aber in umgekehrter Reihenfolge zu der oben erläuterten Überführung in die exponierte Lage der Bedienblende 6.

Fig. 6 zeigt einen der beiden baugleichen Tanks 8 im Detail und in einer geschnittenen Ansicht. Der Tank 8 ist schubladenartig ausgebildet und kann entsprechend in das Gehäuse 10 eingeschoben werden. Der nach oben offene Tank 8 wird durch einen entnehmbaren Deckel 8.3 abgedeckt. Der Deckel 8.3 weist in der Mitte eine Einfüllöffnung 8.4 auf. Am dem Deckel 8.3 zugewandten Ende einer Seitenwand des Tanks 8 ist ein an sich bekanntes Auslassventil 8.5 angeordnet. Das Ventil 8.5 ragt mit einem Ansaugstutzen 8.6 in den Tank 8 hinein. Das Ventil 8.5 weist einen mittigen Dorn 8.5.1 auf, der mittels einer Feder 8.5.2 vorgespannt ist und bei entnommenen Tank 8 durch die Federkraft mit einem Dichtungsring 8.5.3 gegen eine Anlageschulter 8.5.4 gedrückt wird. Das Ventil 8.5 ist dadurch geschlossen. Wird der Tank 8 in das Gehäuse 10 vollständig eingeschoben, drückt der Tank 8 mit der Anlageschulter 8.5.4 gegen eine ringförmige Dichtung 10.1 an einem Zufuhrkanal 10.2 des Gehäuses 10, so dass die Kontaktstelle von Tank 8 und Zufuhrkanal 10.2 gegen die Umgebung dicht abgeschlossen ist. Mit dem Einschieben des Tanks 8 gelangt der Dorn 8.5.1 über einen daran angeformten ringförmigen Steg 8.5.1.1 des Ventils 8.5 in Kontakt mit dem Gehäuse 10. Die Feder 8.5.2 wird zusammengedrückt und gespannt, so dass der Dichtungsring 8.5.3 von der Anlageschulter 8.5.4 abgehoben wird. Wird nun mittels einer Pumpe oder dergleichen das Wasser aus dem Tank 8 angesaugt, kann dies an dem Dichtungsring 8.5.3 vorbei in einen nicht näher dargestellten und den Dorn 8.5.1 umgebenden Ringkanal einströmen und gelangt auf diese Weise zur Weiterleitung in den Zufuhrkanal 10.2.

Die Erfindung ist nicht auf das vorliegende Ausführungsbeispiel begrenzt. Beispielsweise sind auch andere Haushaltsgeräte, wie andere Gargeräte, Getränkebereiter, Kühlmöbel, Wäschebehandlungsmaschinen, Geschirrspülmaschinen oder dergleichen denkbar, denen Wasser, Reinigungsflüssigkeiten oder andere Flüssigkeiten zugeführt werden müssen oder können. Gleiches gilt auch für Haushaltsgeräte, denen gasförmige Fluide zugeführt werden müssen oder können. Allerdings sind dann andere Tanks erforderlich. Darüber hinaus ist die Verstellvorrichtung in weiten geeigneten Grenzen frei wählbar. Auch der Antrieb, sofern nicht eine vollständig manuelle Lösung gewünscht ist, ist in weiten geeigneten Grenzen wählbar. Die Bedienoberfläche der Bedienblende muss nicht zwangläufig unabhängig von der Lage der Bedienblende gleich bleiben. Auch kann es für andere Anwendungsfälle gewünscht sein, dass der Neigungswinkel in Abhängigkeit der Lage der Bedienblende in vorher festgelegter Weise selbsttätig verändert wird. Die Bedienblende muss nicht zwangsläufig am oberen Rand des Haushaltsgeräts angeordnet sein und kann, je nach Haushaltsgerätetyp und Aufstellungs- oder Einbauort, zweckmäßigerweise auch in andere Richtungen als nach oben bewegbar sein. Abweichend von dem Ausführungsbeispiel kann auch lediglich ein Tank oder mehr als zwei Tanks verwendet werden.

## Patentansprüche

1. Haushaltsgerät mit einer Bedienblende (6) und mit einem Tank (8) zur Aufnahme eines Fluids, wobei der Tank (8) zur Befüllung mit dem Fluid eine Einfüllöffnung (8.4) aufweist und in der Betriebslage hinter der Bedienblende (6) in dem Inneren des Haushaltsgeräts angeordnet ist,
**dadurch gekennzeichnet,**
**dass** die Bedienblende (6) zwischen einer Ruhelage, in der die Bedienblende (6) den Zugriff auf den in der Betriebslage befindlichen Tank (8) oder dessen Einfüllöffnung (8.4) verhindert, und einer exponierten Lage, in der die Bedienblende (6) den Zugriff ermöglicht, hin und her bewegbar ist.

2. Haushaltsgerät nach Anspruch 1,
**dadurch gekennzeichnet,**
**dass** die Bedienblende (6) in der Ruhelage und bezogen auf die Betriebslage des Haushaltsgeräts am oberen Rand der Front des Haushaltsgeräts angeordnet ist und in der exponierten Lage eine Höhenlage oberhalb der Ruhelage einnimmt.

3. Haushaltsgerät nach Anspruch 1 oder 2,
**dadurch gekennzeichnet,**
**dass** die Bedienblende (6) in der exponierten Lage und bezogen auf die Betriebslage des Haushaltsgeräts vor der Front des Haushaltsgeräts liegt.

4. Haushaltsgerät nach mindestens einem der Ansprüche 1 bis 3,
**dadurch gekennzeichnet,**
**dass** die Bedienblende (6) an einer an dem Korpus (2) des Haushaltsgeräts gehaltenen Verstellvorrichtung (16) angeordnet ist.

5. Haushaltsgerät nach Anspruch 4,
**dadurch gekennzeichnet,**
**dass** die Bedienblende (6) mittels der Verstellvorrichtung (16) bei der Überführung von der Ruhelage in die exponierte Lage zuerst in eine vor der Front befindliche Zwischenlage und danach von der Zwischenlage in die exponierte Lage überführbar ist.

6. Haushaltsgerät nach Anspruch 4 oder 5,
**dadurch gekennzeichnet,**
**dass** die Verstellvorrichtung (16) derart ausgebildet ist, dass der Neigungswinkel der Bedienoberfläche (6.3) der Bedienblende (6) relativ zu dem Rest des Haushaltsgeräts bei der Überführung in die exponierte Lage und in der exponierten Lage im Wesentlichen dem Neigungswinkel der Bedienoberfläche (6.3) in der Ruhelage entspricht.

7. Haushaltsgerät nach mindestens einem der Ansprüche 1 bis 6,
**dadurch gekennzeichnet,**
**dass** der Tank (8) entnehmbar in einem hinter der Bedienblende (6) in dem Inneren des Haushaltsgeräts angeordneten Gehäuse (10) gehalten ist.

8. Haushaltsgerät nach Anspruch 7,
**dadurch gekennzeichnet,**
**dass** die Bedienblende (6) und das Gehäuse (10) mittels einer Kupplung (Gelenk 16.1 und Stangen 16.2, 16.3) derart gekoppelt sind, dass bei der Bewegung der Bedienblende (6) von der Ruhelage in die exponierte Lage das Gehäuse (10) automatisch von einer integrierten Lage in dem Korpus (2) in eine Befülllage zur Befüllung des Tanks (8) mit dem Fluid oder zur Entnahme des Tanks (8) überführbar ist.

9. Haushaltsgerät nach Anspruch 7 oder 8,
**dadurch gekennzeichnet,**
**dass** die Bedienblende (6) und das Gehäuse (10) mittels einer Kupplung (Gelenk 16.1 und Stangen 16.2, 16.3) derart gekoppelt sind, dass bei der Bewegung der Bedienblende (6) von der exponierte Lage in die Ruhelage das Gehäuse (10) automatisch von einer Befülllage zur Befüllung des Tanks (8) mit dem Fluid oder zur Entnahme des Tanks (8) in eine integrierte Lage in dem Korpus (2) überführbar ist.

10. Haushaltsgerät nach mindestens einem der Ansprüche 1 bis 9,
**dadurch gekennzeichnet,**
**dass** die Bedienblende (6) oder die Verstellvorrichtung (16) für die Bewegung der Bedienblende (6) zwischen der Ruhelage und der exponierten Lage einen Antrieb (14) aufweist.

## Claims

1. Household appliance comprising a control panel (6) and a reservoir (8) for holding a fluid, the reservoir (8) having a filling opening (8.4) for filing with the fluid, and being arranged behind the control panel (6) in the interior of the household appliance in the operating position,
**characterised in that**
the control panel (6) is movable between a rest position, in which the control panel (6) impedes access to the reservoir (8) in the operating position or the filling opening (8.4) thereof, and an exposed position, in which the control panel (6) allows access.

2. Household appliance according to claim 1,
**characterised in that**
in the recent position in the control panel (6) is arranged on an upper edge of the front of the household appliance based on the operating position of said household appliance, and in the exposed position said control panel is arranged at a level above the rest position.

3. Household appliance according to either claim 1 or claim 2,
**characterised in that**
in the exposed position the control panel (6) is positioned in front of the front of the household appliance based on the operating position of the household appliance.

4. Household appliance according to at least one of claims 1 to 3,
**characterised in that**
the control panel (6) is arranged on a positioning mechanism (16) held on the body (2) of the household appliance.

5. Household appliance according to claim 4,
**characterised in that**
in the movement from the rest position to the exposed position, the control panel (6) is movable by means of the positioning mechanism (16) firstly to an intermediate position located in front of the front and subsequently from the intermediate position to the exposed position.

6. Household appliance according to either claim 4 or claim 5,
**characterised in that**
the positioning mechanism (16) is constructed in such a way that the angle of inclination of the user interface (6.3) of the control panel (6) relative to the remainder of the household appliance, during the movement into the exposed position and in the exposed position, corresponds substantially to the angle of inclination of the user interface (6.3) in the rest position.

7. Household appliance according to at least one of claims 1 to 6,
**characterised in that**
the reservoir (8) is removably held in a housing (10) arranged behind the control panel (6) in the interior of the household appliance.

8. Household appliance according to claim 7,
**characterised in that**
the control panel (6) and the housing (10) are coupled by means of a coupling (joint 16.1 and rods 16.2, 16.3), in such a way that when the control panel (6) is being moved from the rest position to the exposed position, the housing (10) is automatically movable from an integrated position in the body (2) to a filling position for filling the reservoir (8) with the fluid or for removing the reservoir (8).

9. Household appliance according to either claim 7 or claim 8,
**characterised in that**
the control panel (6) and the housing (10) are coupled by means of a coupling (joint 16.1 and rods 16.2, 16.3), in such a way that when the control panel (6) is being moved from the exposed position to the rest position, the housing (10) is automatically movable from a filling position for filling the reservoir (8) with the fluid or for removing the reservoir (8) to an integrated position in the body (2).

10. Household appliance according to at least one of claims 1 to 9,
**characterised in that**
the control panel (6) or the positioning mechanism (16) has a drive device (14) to move the control panel (6) between the rest position and the exposed position.

## Revendications

1. Appareil ménager avec un bandeau de manoeuvre (6) et un réservoir (8) pour loger un fluide, le réservoir (8) présentant une ouverture de remplissage (8.4) pour le remplissage avec le fluide et étant disposé, en position de fonctionnement, derrière le bandeau de manoeuvre (6) à l'intérieur de l'appareil ménager,
**caractérisé en ce que**
le bandeau de manoeuvre (6) peut être déplacé alternativement entre une position de repos, dans laquelle le bandeau de manoeuvre (6) empêche l'accès au réservoir (8) situé dans la position de fonctionnement ou à son ouverture de remplissage (8.4), et une position exposée dans laquelle le bandeau de manoeuvre (6) permet l'accès.

2. Appareil ménager selon la revendication 1,
**caractérisé en ce que**
le bandeau de manoeuvre (6), dans la position de repos et par rapport à la position de fonctionnement de l'appareil ménager, est disposé sur le bord supérieur de la façade de l'appareil ménager et, dans la position exposée, adopte une position en hauteur au-dessus de la position de repos.

3. Appareil ménager selon la revendication 1 ou 2,
**caractérisé en ce que**
le bandeau de manoeuvre (6), dans la position exposée et par rapport à la position de fonctionnement de l'appareil ménager, est situé devant la façade de l'appareil ménager.

4. Appareil ménager selon au moins l'une des revendications 1 à 3,
**caractérisé en ce que**
le bandeau de manoeuvre (6) est disposé sur un dispositif de déplacement (16) retenu sur le corps (2) de l'appareil ménager.

5. Appareil ménager selon la revendication 4,
**caractérisé en ce que**,
lors du transfert depuis la position de repos vers la position exposée, le bandeau de manoeuvre (6) peut, au moyen du dispositif de déplacement (16), être transféré d'abord dans une position intermédiaire située devant la façade et ensuite depuis la position intermédiaire vers la position exposée.

6. Appareil ménager selon la revendication 4 ou 5,
**caractérisé en ce que**
le dispositif de déplacement (16) est constitué de telle sorte que l'angle d'inclinaison de la surface de manoeuvre (6.3) du bandeau de manoeuvre (6) par rapport au reste de l'appareil ménager, lors du transfert vers la position exposée et dans la position exposée, correspond essentiellement à l'angle d'inclinaison de la surface de manoeuvre (6.3) dans la position de repos.

7. Appareil ménager selon au moins l'une des revendications 1 à 6,
**caractérisé en ce que**
le réservoir (8) est retenu de façon amovible dans un carter (10) disposé derrière le bandeau de manoeuvre (6) à l'intérieur de l'appareil ménager.

8. Appareil ménager selon la revendication 7,
**caractérisé en ce que**
le bandeau de manoeuvre (6) et le carter (10) sont couplés au moyen d'un accouplement (articulation 16.1 et tiges 16.2, 16.3) de sorte que, lors du mouvement du bandeau de manoeuvre (6) depuis la position de repos vers la position exposée, le carter (10) peut être transféré automatiquement depuis une position intégrée dans le corps (2) vers une position de remplissage pour le remplissage du réservoir (8) avec le fluide ou pour l'enlèvement du réservoir (8).

9. Appareil ménager selon la revendication 7 ou 8,
**caractérisé en ce que**
le bandeau de manoeuvre (6) et le carter (10) sont couplés au moyen d'un accouplement (articulation 16.1 et tiges 16.2, 16.3) de sorte que, lors du mouvement du bandeau de manoeuvre (6) depuis la position exposée vers la position de repos, le carter (10) peut être transféré automatiquement depuis une position de remplissage pour le remplissage du réservoir (8) avec le fluide ou pour l'enlèvement du réservoir (8) vers une position intégrée dans le corps (2).

10. Appareil ménager selon au moins l'une des revendications 1 à 9,
**caractérisé en ce que**
le bandeau de manoeuvre (6) ou le dispositif de déplacement (16) présente un entraînement (14) pour le déplacement du bandeau de manoeuvre (6) entre la position de repos et la position exposée.
